# EUROPEAN PATENT SPECIFICATION

(11) **EP 3 594 113 B1**
(45) Date of publication and mention of the grant of the patent: **09.06.2021**
(21) Application number: 18400023.0
(22) Date of filing: 10.07.2018
(51) Int. Cl.: B64C 17/02, B64C 29/00

(54) **AN APPARATUS FOR ADJUSTING THE CENTER OF GRAVITY OF A VERTICAL TAKE-OFF AND LANDING AIRCRAFT**
VORRICHTUNG ZUM EINSTELLEN DES SCHWERPUNKTS EINES VERTIKAL STARTENDEN UND LANDENDEN FLUGZEUGS
APPAREIL PERMETTANT DE RÉGLER LE CENTRE DE GRAVITÉ D'UN AÉRONEF À DÉCOLLAGE ET ATTERRISSAGE VERTICAL

(43) Date of publication of application: 15.01.2020
(73) Proprietor: AIRBUS HELICOPTERS DEUTSCHLAND GmbH, 86609 Donauwörth (DE)
(72) Inventor: Kiesewetter, Uwe, D-86641 Rain AM Lech (DE); Reichensperger, Christian, D-86663 Asbach Bäumenheim (DE); Kicker, Klaus, D-86567 Hilgertshausen-Tandern (DE); Geiss, Michael, D-86753 Möttingen (DE)
(74) Representative: GPI & Associés

(56) References cited:
- WO-A1-2017/021391
- CN-A- 106 828 886
- CN-U- 205 418 074
- US-A1- 2006 113 425
- US-B1- 9 550 561

## Description

The invention is related to a vertical take-off and landing (VTOL) aircraft, and, more particularly, to an apparatus for adjusting the center of gravity of a vertical take-off and landing (VTOL) aircraft.

Proper balance control, which refers to the location of the center of gravity of an aircraft, is an important factor for the efficient and safe operation of the aircraft as it influences the aircraft's stability during operation. In fact, the center of gravity, which is the point in which the total weight of the aircraft is assumed to be concentrated, affects the stability of the aircraft during operation and must be located within specified limits established by the aircraft manufacturer to guarantee a safe operation of the aircraft. Lateral balance and longitudinal balance are both important. However, the longitudinal balance, i.e. the location of the center of gravity along a longitudinal axis, which is sometimes also referred to as a nose-aft axis, is generally of a greater concern.

As an example, a center of gravity that is located too far forward may not provide enough elevator authority and thereby increase the length of take-off and landing runs. As another example, a center of gravity that is located too far backward may make it difficult to recover the aircraft from a stall. In other words, placing the center of gravity outside the specified limits established by the aircraft manufacturer may cause major difficulties for maintaining a level flight and may ultimately lead to a crash of the aircraft.

Vertical take-off and landing (VTOL) aircrafts face further challenges as the ideal center of gravity differs based on the mode of operation. For example, the ideal center of gravity for cruise and hover are different. In other words, the ideal center of gravity during take-off and landing is different than the ideal center of gravity during forward, sideward, or backward flight.

The center of gravity of helicopters can be controlled within certain limits by the fuel system, for example through controlled filling and draining of tank bladders that are generally located in a subfloor region of helicopters. However, a helicopter that uses the fuel system to control the center of gravity and that is properly loaded and balanced at take-off, can be out of balance along a longitudinal and/or a lateral axis near the end of a long flight when the fuel tanks are almost empty.

Document US 6,460,802 B1 describes a helicopter propulsion and control system configured for actuating a helicopter airframe according to control inputs of an operator, comprising a counter-rotating rotor set tiltably coupled to the airframe at a first location, the rotor set having a downward thrust vector and a power assembly configured to actuate the counter-rotating rotor set, having a center of gravity, and being fixedly coupled to the rotor set so as to be tiltable therewith, the center of gravity of said power assembly being disposed below the first location where the rotor set is tiltably coupled to the airframe and a control actuator operatively coupled between the power assembly and the airframe to enable the center of gravity of the airframe to move with respect to the center of gravity of the power assembly, and with respect to the thrust vector of the rotor set, whereby pitch and roll of the airframe are controllable by the operator.

Document CN 203601574 describes a very small unmanned aerial vehicle (UAV) in which the adjustment of the center of gravity is performed manually. Battery packs are installed on or below a bottom plate between a front and rear plate. Center of gravity adjustment is performed by moving the battery packs together with the front and rear plate on the bottom plate, whereby the front and rear plates are fastened at predetermined positions by choosing among 24-hole positions in the bottom plate. In other words, the adjustment happens only once before the flight, and the center of gravity adjustments are performed on a trial-and-error basis.

Thus, in summary, the ideal center of gravity of a vertical take-off and landing (VTOL) aircraft is different for different modes of operation such as cruise and hover. As a result, a VTOL aircraft with a fixed center of gravity faces several problems. As an example, the lift distribution between different propellers or rotors of a VTOL aircraft with a fixed center of gravity may be unequal. An unequal lift distribution may require a different revolution-per-minute (RPM) of otherwise similar propellers or different RPM and/or different pitch angles for otherwise similar rotors. State-of-the-art solutions for adjusting the center of gravity such as using the fuel system or statically fixing weights before the flight deliver unsatisfactory solutions as the center of gravity may evolve during a flight.

Document US 9 550 561 B1 describes a system and method for determining the center of gravity of a payload engaged by an automated aerial vehicle and adjusting components of the automated aerial vehicle and/or the engagement location with the payload so that the center of gravity of the payload is within a defined position with respect to the center of gravity of the automated aerial vehicle. Adjusting the center of gravity to be within a defined position improves the efficiency, manoeuvrability and safety of the automated aerial vehicle. In some implementations, the stability of the payload may also be determined to ensure that the center of gravity does not change or shift during transport due to movement of an item of the payload.

Document US 2006/113425 A1 describes a vertical take-off and landing aircraft with means for displacing the center of gravity of the aircraft within a plane extending normal to the rotor pivot axis. For the implementation of the displacement, it is recommended to mount the object, of which the position of the center of gravity can be changed, on rails and to carry out its relative movement with respect thereto. The displacement of the center of gravity of the aircraft in the longitudinal direction takes place, for example, by means of at least one stepping motor, which displaces, for example, the drive engine of the rotor in the longitudinal direction of the aircraft.

Document CN 205 418 074 U describes an unmanned aerial vehicle (UAV) with a balance regulator that includes a device mounting seat disposed at the lower end of the UAV fuselage and mounted on the right side of the lower end surface of the equipment mounting seat. The UAV balance adjusting device includes a turret, a battery slot, a first cylinder and a second cylinder. The turret includes two pairs of rotating rods symmetrically arranged along both sides of the fuselage, and a translating plate connected to each of the rotating rods. The top of each pair of rotating rods is opposite to the bottom plate. A hinged plate is respectively hinged to the bottom of each of the rotating rods. In operation, each of the rotating rods can be synchronously rotated around the bottom plate, and each of the rotating rods is provided with a sliding groove. The balance adjustment process does not require manual operation.

It is, therefore, an objective to provide a new apparatus for dynamically and automatically adjusting the center of gravity during operation of a VTOL aircraft based on the flight activity. Moreover, means for moving already present weights may be desirable. In other words, increasing the weight of the VTOL aircraft should be avoided.

This objective is solved by an apparatus for adjusting the center of gravity of a vertical take-off and landing aircraft and comprises the features of claim 1. More specifically, an apparatus for adjusting the center of gravity of a vertical take-off and landing aircraft that comprises at least one of longitudinal, transversal, vertical, or diagonal structural frames and that is adapted for the transportation of passengers based on a current operating mode of the vertical take-off and landing aircraft includes a movable support that is movable between a plurality of positions, a connecting device that connects the movable support to the at least one of the longitudinal, the transversal, the vertical, or the diagonal structural frames of the vertical take-off and landing aircraft, wherein the connecting device comprises pendulum struts that are configured to be attached to the at least one of the longitudinal, the transversal, the vertical or the diagonal structural frames, an energy storage module that is attached to the movable support, and an actuator that is attached to the at least one of the longitudinal, the transversal, or the vertical structural frames, and that is connected to the movable support and receives a control signal that is indicative of the current operating mode. The movable support is movable from a first to a second position of the plurality of positions by the actuator based on the control signal indicating a change of the current operating mode from a first to a second operating mode, the first position being associated with a first center of gravity in the first operating mode and the second position being associated with a second center of gravity in the second operating mode. The movable support is suspended from the at least one of the longitudinal, the transversal, the vertical, or the diagonal structural frames by means of the pendulum struts. Adjusting the length of the pendulum struts enables adjusting the position of the movable support in a vertical direction. The actuator comprises a power unit and a force transmitting device that is connected between the power unit and the movable support. The force transmitting device transmits a force from the power unit to the movable support that moves the movable support forwards or backwards in at least one dimension.

A variable center of gravity greatly improves the flight performances and the efficiency of the VTOL aircraft. A variable center of gravity offers further benefits related to noise reduction that are at least partly related to lower revolutions-per-minute (RPMs) of at least some propellers. Moreover, a variable center of gravity has a significant impact on an electrical drive system, which is the main weight driver for electrical VTOL aircraft and which may have a lower performance and, as a result, a lower weight than without a variable center of gravity.

Batteries represent an important part of the weight of an electrically driven VTOL aircraft. This makes them a good candidate to balance the VTOL aircraft for different center of gravity positions without additional mass. An airframe may support the batteries under various positions. For example, two parallel upper deck longerons may provide a support in longitudinal direction (i.e., between nose and aft of the VTOL aircraft). A positioning system may support the movement of the batteries along the longitudinal axis. This positioning system may include linear guiding systems.

The first advantage of an apparatus for adjusting the center of gravity in a VTOL aircraft such as a multicopter is due to the lift distribution, which is generally sensitive to the center of gravity. In fact, the center of gravity may determine the thrust required by each propeller or rotor. Furthermore, the required thrust value for each propeller or rotor is depending on the aircraft's manoeuvres and load out, e.g. for hover the required thrust is usually different than the required thrust for cruise. As a consequence, at least two different sizing points for the electric engines may be required, whereby oversizing and multiple sizing points are unavoidable.

In some scenarios, the VTOL aircraft may use fixed pitch propellers. In these scenarios, the only mean of thrust increase is a higher RPM. This leads to a higher noise emission. Decreasing the required thrust through a lower RPM enabled by a variable center of gravity leads to a corresponding reduction of the emitted noise. Furthermore, decreasing the required thrust may lead to smaller engines, less power consumption, and/or less weight and/or more range.

During forward flight, which is accountable for the largest part of the fatigue spectrum, flight loads are reduced. Reduced flight loads lead to a higher life time of the propeller or rotor and/or to a reduced weight.

An adjustable center of gravity may enable optimised trimming without additional mass and without other techniques such as horizontal stabilizers that may create downward lift or complicated fuel pump systems.

An adjustable center of gravity may improve the VTOL aircraft's overall performance. For example, a power saving of up to 20% compared to a VTOL aircraft without an adjustable center of gravity may be achieved due to an improved utilisation of the lift and hence a lower required rotor and/or propeller thrust on some of the rotors/propellers. Furthermore, due to the lower power demand, some self-amplifying effects may be realized. Examples for such effects may include a weight saving on engines and/or on the cooling system.

In scenarios in which the VTOL aircraft has an adjustable center of gravity and electrically driven rotors and/or propellers, the discharge rate of the battery is lower compared to VTOL aircraft without an adjustable center of gravity, which may have significant impact on the battery architecture where the discharge rate is responsible for the required cooling. Furthermore, the electric flux in the cables may be lower due to the lower power consumption. Therefore, the diameters of the electrical cables may be reduced, which leads to further weight savings.

According to one aspect, the vertical take-off and landing aircraft defines a longitudinal direction, a lateral direction, and a vertical direction, and wherein the first position differs from the second position in at least one of the longitudinal direction, the lateral direction, or the vertical direction.

According to one aspect, the energy storage module includes at least one of an accumulator, a battery, a fuel cell, a fuel tank, a gas tank, or a flow cell.

According to one aspect, the force transmitting device includes at least one of a gear, a spindle, a pulley, a chain, a cord, a cable, a telescopic slide, a bar, a rod, mounted wheels on axle or a rack and pinion.

According to one aspect, the power unit includes at least one of an electrical motor, an internal-combustion type engine, a hydraulic motor, or a pneumatic motor.

Furthermore, a method, according to claim 6, for adjusting the center of gravity of a vertical take-off and landing aircraft that is adapted for the transportation of passengers using the apparatus mentioned above includes the operations of receiving, with the actuator, a control signal that is indicative of a change in operating mode of the vertical take-off and landing aircraft from a first to a second operating mode, in response to receiving the control signal, using the power unit of the actuator to generate a force, and using the force transmitting device of the actuator to translate the force into a movement that moves the movable support from a first to a second position, the first position being associated with a first center of gravity in the first operating mode and the second position being associated with a second center of gravity in the second operating mode.

Moreover, a vertical take-off and landing aircraft that is adapted for the transportation of passengers may include the apparatus for adjusting the center of gravity mentioned above.

Embodiments are outlined by way of example in the following description with reference to the attached drawings. In these attached drawings, identical or identically functioning components and elements are labeled with identical reference numbers and characters and are, consequently, only described once in the following description.
- Figure 1 is a diagram of an illustrative aircraft with four thrust producing units in an X-shaped configuration in accordance with some embodiments,
- Figure 2A is a diagram of an illustrative vertical take-off and landing (VTOL) aircraft showing an ideal center of gravity for hover operation,
- Figure 2B is a diagram of an illustrative VTOL aircraft showing an ideal center of gravity for forward flight operation,
- Figure 3 is a diagram of an illustrative VTOL aircraft with an apparatus for adjusting the center of gravity,
- Figure 4 is a diagram of an illustrative connecting device with a movable support of an apparatus for adjusting the center of gravity of a VTOL aircraft,
- Figure 5 is a diagram of an illustrative actuator of an apparatus for adjusting the center of gravity of a VTOL aircraft in accordance with some embodiments,
- Figure 6 is a diagram of an illustrative VTOL aircraft having an apparatus for adjusting the center of gravity with a connecting device that includes pendulum struts in accordance with some embodiments,
- Figure 7A is a diagram of an illustrative VTOL aircraft having an apparatus for adjusting the center of gravity with a connecting device that includes pendulum struts and an actuator that moves the center of gravity towards the actuator in accordance with some embodiments,
- Figure 7B is a diagram of an illustrative VTOL aircraft having an apparatus for adjusting the center of gravity with a connecting device that includes pendulum struts and an actuator that moves the center of gravity away from the actuator in accordance with some embodiments,
- Figure 8 is a diagram of an illustrative VTOL aircraft having an apparatus for adjusting the center of gravity with a connecting device that includes a low friction device, and
- Figure 9 is a diagram of a flow chart showing illustrative operations for adjusting the center of gravity of a VTOL aircraft in accordance with some embodiments.

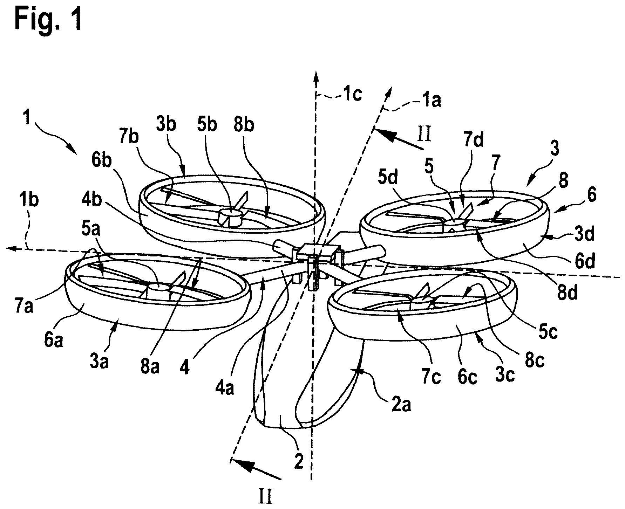

Figure 1 shows an aircraft 1 that is exemplarily illustrated as a vertical take-off and landing (VTOL) aircraft such as a multirotor aircraft, and, more particularly, as a human-sized multirotor aircraft. However, the present invention is not limited to an application in VTOL aircrafts. Instead, any vehicle that may benefit from an adjustable center of gravity is likewise contemplated. By way of example, the present invention may alternatively be included in other aircrafts, such as airplanes, in vessels, such as ships, and so on. However, for purposes of illustration, embodiments are hereinafter described with respect to VTOL aircrafts.

Aircraft 1 includes an aircraft airframe 2, which is sometimes also referred to as airframe 2. Airframe 2 defines a supporting structure of aircraft 1.

As shown, airframe 2 has an extension in longitudinal direction 1a, an extension in lateral direction 1b as well as an extension in vertical direction 1c and defines an internal volume 2a. In some embodiments, the internal volume 2a is adapted for transportation of passengers, so that the multirotor aircraft 1 as a whole is adapted for transportation of passengers. If desired, internal volume 2a may be adapted for accommodating at least some of the operational and electrical equipment.

It should be noted that exemplary configurations of the internal volume 2a that are suitable for accommodation of operational and electrical equipment, but also for transportation of passengers, are readily available to the person skilled in the art and generally implemented to comply with applicable authority regulations and certification requirements.

According to one aspect, the aircraft 1 may have a predetermined number of thrust producing units 3. If desired, the predetermined number of thrust producing units 3 may comprise any number of two or more thrust producing units 3. As shown in Figure 1, aircraft 1 may illustratively have four thrust producing units 3a, 3b, 3c, 3d. The thrust producing units 3a, 3b, 3c, 3d are embodied for producing thrust in a predetermined direction in operation, such that the multirotor aircraft 1 is able to hover in the air as well as to fly in any forward, rearward, or sideward direction.

If desired, the thrust producing units 3a, 3b, 3c, 3d may be structurally connected to a predetermined number of structural supports 4, which may include structural support members 4a, 4b.

As shown, the thrust producing units 3a, 3d may be connected to structural support member 4a, and the thrust producing units 3b, 3c to structural support member 4b, wherein the structural support members 4a, 4b define the predetermined number of structural supports 4. In some embodiments, the structural support members 4a, 4b may mechanically couple the four thrust producing units 3a, 3b, 3c, 3d to each other in an X-shaped configuration.

As shown, the thrust producing units 3a, 3b, 3c, 3d comprise an associated shrouding. By way of example, a plurality of shrouding units 6 is shown with four separate shroudings 6a, 6b, 6c, 6d. Illustratively, the shrouding 6a is associated with the thrust producing unit 3a, the shrouding 6b with the thrust producing unit 3b, the shrouding 6c with the thrust producing unit 3c and the shrouding 6d with the thrust producing unit 3d. The plurality of shrouding units 6 may improve the aerodynamics of the thrust producing units 3 and increase operational safety at the cost of increasing the weight of aircraft 1.

Shroudings 6a, 6b, 6c, 6d may be made of a simple sheet metal and/or have a complex geometry. If desired, the shroudings 6a, 6b, 6c, 6d may be connected to the predetermined number of structural supports 4. For example, the shroudings 6a, 6d may be connected to the structural support member 4a, and the shroudings 6b, 6c to the structural support member 4b.

If desired, the thrust producing units 3a, 3b, 3c, 3d may be equipped with respective propeller assemblies, which may have a fixed pitch angle. In some embodiments, the thrust producing units 3a, 3b, 3c, 3d may be equipped with respective rotor assemblies, which may have a variable pitch angle. If desired, some thrust producing units may be equipped with propeller assemblies, while other thrust producing units may be equipped with rotor assemblies.

By way of example, thrust producing unit 3a may be equipped with rotor assembly 8a, thrust producing unit 3b may be equipped with rotor assembly 8b, thrust producing unit 3c may be equipped with rotor assembly 8c, and thrust producing unit 3d may be equipped with rotor assembly 8d. The rotor assemblies 8a, 8b, 8c, 8d illustratively define a plurality of rotor assemblies 8. If desired, the rotor assemblies 8a, 8b, 8c, 8d may be driven by a single engine (e.g., with the help of gearbox fairings). Alternatively, two or more engines of a plurality of engines 5 may each drive one or more of rotor assemblies 8a, 8b,8c, 8d.

As shown, the rotor assemblies 8a, 8b, 8c, 8d may each be driven by a separate engine 5a, 5b, 5c, 5d of the plurality of engines 5, respectively. Illustratively, rotor assembly 8a may be mounted to shrouding 6a by means of supporting structure 7a and driven by engine 5a and, rotor assembly 8b may be mounted to shrouding 6b by means of supporting structure 7b and driven by engine 5b, rotor assembly 8c may be mounted to shrouding 6c by means of supporting structure 7c and driven by engine 5c, and rotor assembly 8d may be mounted to shrouding 6d by means of supporting structure 7d and driven by engine 5d.

In operation of aircraft 1, control of thrust generation by means of thrust producing units 3a, 3b, 3c, 3d of the predetermined number of thrust producing units 3 for generating thrust in a predetermined direction may be achieved by means of an optional pitch variation, by means of revolutions per minute (RPM) variation, or by means of a combination of pitch and RPM variation. If the rotor assemblies 8a, 8b, 8c, 8d of the plurality of rotor assemblies 8 are not provided with an optional pitch variation, e. g. if respective rotor blades of the rotor assemblies 8a, 8b, 8c, 8d are implemented as fixed pitch blades, control of the thrust generation by means of pitch variation cannot by performed.

In some embodiments, aircraft 1 is equipped with an apparatus for adjusting the center of gravity. As an example, the apparatus includes a movable support that is movable between different positions, an energy storage module that is attached to the movable support, and an actuator that is connected to the movable support and receives a control signal that is indicative of the current operating mode. The movable support is movable between the different positions by the actuator based on the control signal. For example, the control signal may indicate a change of the current operating mode from a hover mode to a cruise mode. The different positions may be associated with different ideal centers of gravity of the respective operating mode.

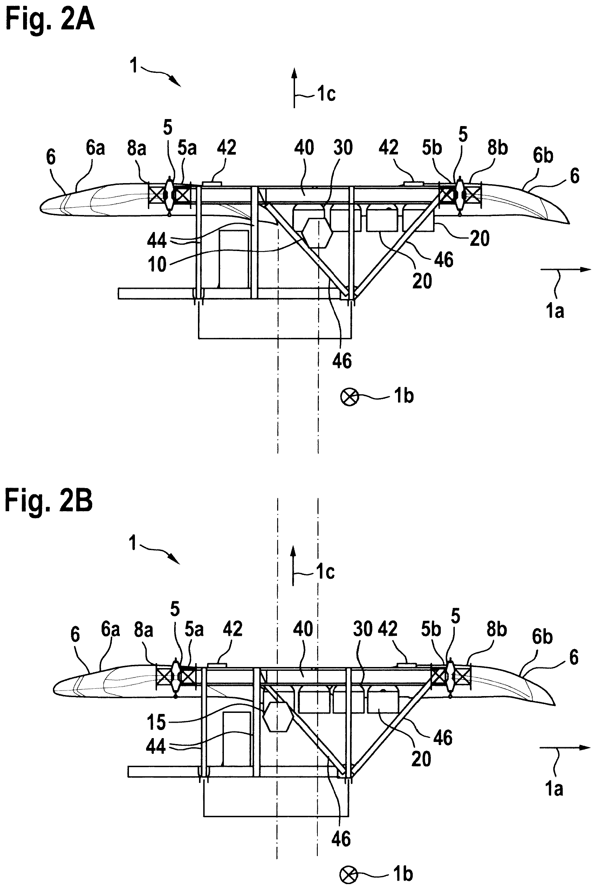

In other words, the apparatus for adjusting the center of gravity adapts the center of gravity based on a current operating mode of aircraft 1. For example, aircraft 1 may have a first ideal center of gravity when operating in hover mode and a second ideal center of gravity when operating in cruise mode. The first and second ideal centers of gravity may be different as illustrated in Figures 2A and 2B.

Figures 2A and 2B show an illustrative VTOL aircraft such as aircraft 1 of Figure 1 which do not form part of the present invention. As shown, aircraft 1 includes rotor assemblies 8a and 8b that are mounted to shroudings 6a and 6b, respectively, and have respective engines 5a and 5b, as well as energy storage modules 20, movable support 30, longitudinal structural frame 40, which is sometimes also referred to as longeron 40, transversal structural frames 42, vertical structural frames 44, and diagonal structural frames 46.

Energy storage modules 20 may include at least one of an accumulator, a battery, a fuel cell, a fuel tank, a gas tank, or a flow cell. Energy storage modules 20 may be attached to movable support 30. As an example, energy storage modules 20 may be attached to movable support 30 using fasteners, adhesives, any other attachments, or a combination thereof.

Fasteners may include bolts and nuts, rivets, pins, nails, screws, clips, clamps, brackets, or any other types of fasteners that may be suitable to attach energy storage modules 20 to movable support 30. Adhesives may include glue, caulking, resin, cement, elastomers, thermoplastics, emulsions, thermosets, or other adhesives that may be suitable to attach energy storage modules 20 to movable support 30. Other attachment means may include strings, cables, wires, or tapes.

Movable support 30 may include any suitable means that is movable between a plurality of positions and to which energy storage modules 20 may be attached. As an example, movable support 30 may include a plate or some other surface to which energy storage modules 20 are attached. As another example, movable support 30 may include a casing or a housing in which energy storage is placed and fixed (e.g., a battery housing that includes a battery). As yet another example, movable support 30 may include a handle or an eyelet to which a handle or any other means for moving may be attached (e.g., a handle on a fuel tank or a gas tank).

In some embodiments, a connecting device connects movable support 30 to longitudinal structural frame 40. The movable support 30 is movable between a plurality of positions along longitudinal structural frame 40, thereby moving energy storage modules 20 between a first and a second position. Moving energy storage modules 20 from a first to a second position adjusts the center of gravity of aircraft 1 from a first center of gravity that is associated with the energy storage modules 20 being in the first position and a second center of gravity that is associated with the energy storage modules 20 being in the second position.

For illustration purposes, consider the scenario in which the center of lift of the rotors and/or propellers is identical with the center of lift of ducts and that rotor assembly 8a at the nose of aircraft 1 has the same characteristics as rotor assembly 8b at the aft of aircraft 1. In other words, rotor assemblies 8a and 8b provide both the same lift at the same RPM and pitch angle.

When operating in hover mode in this scenario, the center of lift may be located at an equal distance between the center of lift of rotor assembly 8a and rotor assembly 8b. Consequently, as shown in Figure 2A, the ideal center of gravity for hover 10 may be located at an equal distance between the center of lift of rotor assembly 8a and the center of lift of rotor assembly 8b in a plane that is perpendicular to longitudinal direction 1a.

When operating in cruise mode in this scenario, the center of lift may be located shifted towards the nose of aircraft 1 compared to the center of lift in hover mode. In other words, the center of lift is closer to rotor assembly 8a than to rotor assembly 8b. Consequently, as shown in Figure 2B, the ideal center of gravity for cruise 15 may be located closer to the center of lift of rotor assembly 8a than to the center of lift of rotor assembly 8b in a plane that is perpendicular to longitudinal direction 1a.

In some embodiments, an apparatus adjusts the center of gravity of aircraft 1 based on a current operating mode of aircraft 1. For example, the apparatus moves movable support 30 with energy storage modules 20 from a first position that is associated with a first center of gravity to a second position that is associated with a second center of gravity such that the actual center of gravity of aircraft 1 is within error margins equal to the ideal center of gravity of operating aircraft 1 in the current operating mode.

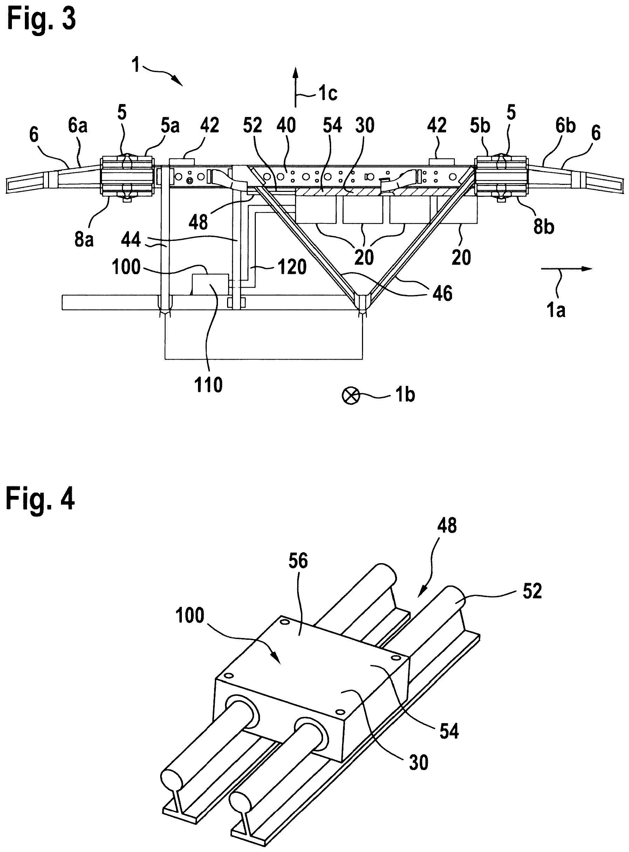

Figure 3 is a diagram of an illustrative VTOL aircraft such as aircraft 1 of Figure 1 with an apparatus for adjusting the center of gravity. As shown, VTOL aircraft 1 may include rotor assemblies 8a and 8b that are mounted to shroudings 6a and 6b, respectively, and have respective engines 5a and 5b, as well as longitudinal structural frame 40, which is sometimes also referred to as longeron 40, transversal structural frames 42, vertical structural frames 44, and diagonal structural frames 46.

VTOL aircraft 1 includes an alternative apparatus for adjusting the center of gravity of VTOL aircraft 1 based on the current operating mode of VTOL aircraft 1. The apparatus for adjusting the center of gravity includes energy storage modules 20, movable support 30, and actuator 100, which moves movable support 30 forwards or backwards in at least one dimension.

The apparatus for adjusting the center of gravity includes a connecting device 48 that connects movable support 30 to longitudinal 40, transversal 42, vertical 44, and/or diagonal 46 structural frames of VTOL aircraft 1. As shown, connecting device 48 includes rods 52 and low friction device 54. Connecting device 48 is attached to longitudinal structural frames 40, and movable support 30 is attached to the low friction device 54.

Actuator 100 includes force transmitting device 120 and power unit 110, which is sometimes also referred to as drive, motor, engine, or propulsion system. Force transmitting device 120 is connected between power unit 110 and movable support 30. If desired, force transmitting device 120 moves movable support 30 forward and/or backward in at least one dimension. For example, force transmitting device 120 moves movable support 30 and hence energy storage modules 20 in longitudinal direction 1a, thereby adjusting the center of gravity of VTOL aircraft 1 in longitudinal direction 1a.

As shown, power unit 110 is located at one end of vertical structural frame 44, and force transmitting device 120 has two 90° angles. If desired, power unit 110 may be located in another position. For example, power unit 110 may be located near the other end of vertical structural frame (e.g., at the same height in vertical direction 1c as movable support 30 with energy storage modules 20).

The implementation of force transmitting device 120 may depend on the location of power unit 110, movable support 30, and/or the direction in which movable support 30 may be moved. As an example, force transmitting device 120 may include at least one of a gear, a spindle, a pulley, a chain, a cord, a cable, a telescopic slide, which is sometimes also referred to as a telescopic rail, a bar, a rod, mounted wheels on axle, or a rack and pinion.

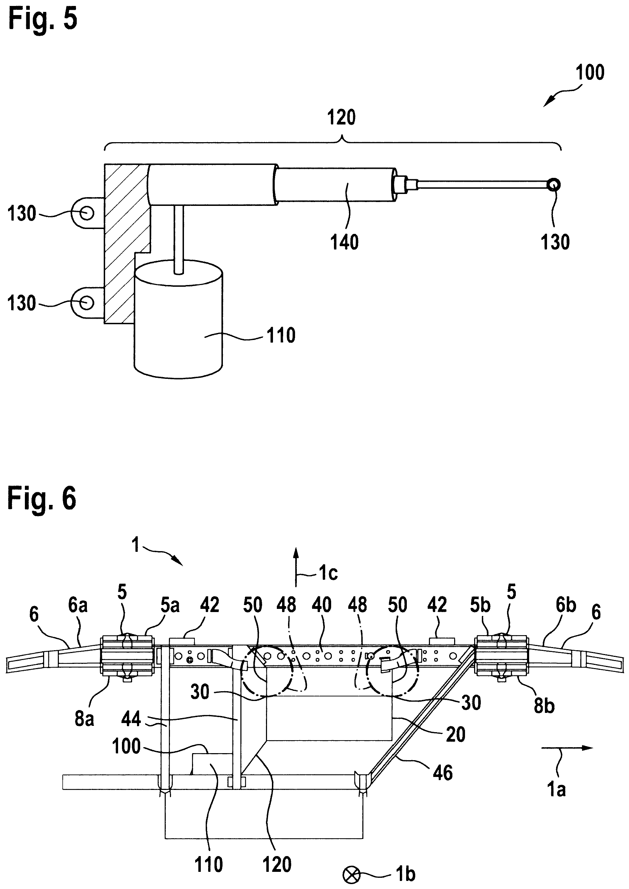

In the example in which power unit 110 is located at the same height in vertical direction 1c as movable support 30 and energy storage modules 20, force transmitting device 120 may be a telescopic rail, if desired. An exemplary embodiment of actuator 100 is described in more detail in Figure 5.

Figure 4 is a diagram of an illustrative connecting device such as connecting device 48 of Figure 3 of an apparatus for adjusting the center of gravity of a VTOL aircraft. Connecting device 48 may include rods 52 and housing 56 with movable support 30. In some embodiments, energy storage modules may be attached to movable support 30.

If desired, connecting device 48 may include low friction device 54. Low friction device 54 may include at least one of a ball bearing, a roll, a parylene coating, or a polytetrafluoroethylene coating. As an example, low friction device 54 may be located in housing 56 and include ball bearings between housing 56 and rods 52 such that movable support 30 may move along rods 52 without significant friction.

In some embodiments, housing 56 may include actuator 100. For example, actuator 100 may include a motor and a force transmitting device. The force transmitting device may transmit a force from the motor to wheels or rolls that move housing 56 along rods 52, thereby moving movable support 30 between different positions on rods 52.

Figure 5 is a diagram of an illustrative actuator of an apparatus for adjusting the center of gravity of a VTOL aircraft in accordance with some embodiments. Actuator 100 includes power unit 110, force transmitting device 120, which may include telescopic rail 140, and attachments 130.

Attachments 130 may have any shape and be made from any material. As shown, attachments 130 may be U-shaped with a round hole. Clevises may be customized to best fit the application they are being used on.

In some embodiments, actuator 100 may have more than one attachment 130. Actuator 100 may have one or more attachments 130 for mounting at least a portion of force transmitting device 120 to a fixed, non-movable object and one or more attachments 130 for attaching another portion of force transmitting device 120 to a movable object such that force transmitting device 120 can move the movable object relative to the fixed, non-movable object.

As an example, one or more attachments 130 of actuator 100 may be mounted to one or more structural frames (e.g., to one or more of longitudinal structural frame 40, transversal structural frame 42, vertical structural frame, 44, or diagonal structural frame 46 of VTOL aircraft 1 of Figure 3) and one or more attachments 130 of actuator 100 may be attached to the object to be moved (e.g., movable support 30 with energy storage modules 20 of VTOL aircraft 1 of Figure 3).

Power unit 110 may include an electrical motor, an internal-combustion type engine, a hydraulic motor, a pneumatic motor, or a combination thereof. As shown, power unit 110 may include a direct current (DC) electrical motor that actuates force transmitting device 120.

Force transmitting device 120 may include a gear, a spindle, a pulley, a chain, a cord, a cable, a telescopic slide, a bar, a rod, mounted wheels on axle, a rack and pinion, or a combination thereof. As shown, force transmitting device 120 includes telescopic rail 140, which may include an extension tube, a drive nut, and a spindle. The drive nut may travel along the spindle and extend or retract the extension tube, thereby creating a linear motion.

If desired, a safety stop may be located on the end of the spindle to prevent the extension tube from overextension. In some embodiments, limit switches may control the fully extended and retracted position of the extension tube, for example by electrically cutting current to an electrical motor. Limit switches may prevent actuator 100 from over extending or over retracting.

According to some aspects, force transmitting device 120 may have gears. Gears may alter the relation between the speed at the output of power unit 110 and the speed at which the extension tube extends.

In some embodiments, force transmitting device 120 may have one or more joints and/or couplings such as a universal joint to allow for force transmission along axes that have an arbitrary angle relative to each other as shown in Figure 3.

As shown in Figure 3, the alternative apparatus for adjusting the center of gravity includes connecting device 48 that includes rods 52 and low friction device 54. Connecting device 48 may be attached to longitudinal structural frames 40, and movable support 30 may be attached to the low friction device 54.

Connecting device 48 includes pendulum struts that are attached to one or more of the longitudinal 40, the transversal 42, the vertical 44, or the diagonal 46 structural frames. Figure 6 is a diagram of an illustrative VTOL aircraft 1 having an apparatus for adjusting the center of gravity with a connecting device 48 that includes pendulum struts 50 in accordance with some embodiments.

As shown in Figure 6, movable support 30 with energy storage modules 20 is suspended from longitudinal structural frames 40 by means of pendulum struts 50. Selecting or adjusting the length of pendulum struts 50 enables adjusting the center of gravity in vertical direction 1c. In some embodiments, a rope, cable, or wire may implement pendulum struts 50. If desired, a winch may adjust the length of the rope, cable, or wire to adjust the center of gravity along in vertical direction 1c based on the operation mode of VTOL aircraft 1.

According to some aspects, rods may implement pendulum struts 50. Such rods may easily absorb energy, e.g., during a crash situation. If desired, an additional bumper may be installed on pendulum struts 50 to improve energy absorption (e.g., during a crash case).

In some embodiments, pendulum struts 50 may be combined with a controlled disconnection of energy storage modules 20, for example to mitigate post-crash hazards caused by energy storage modules 20.

According to some aspects, movable support 30 may include a casing or housing in which energy storage is placed and fixed (e.g., a battery housing that includes a battery). If desired, movable support 30 (i.e., the casing or housing) may have a handle or an eyelet to which pendulum struts 50 are fixed.

In some embodiments, movable support 30 may include an additional handle or eyelet. The additional handle or eyelet may receive force transmitting device 120 of actuator 100 of the apparatus for adjusting the center of gravity. Actuator 100 may be attached to a longeron, a transversal structural frame, and/or a vertical structural frame.

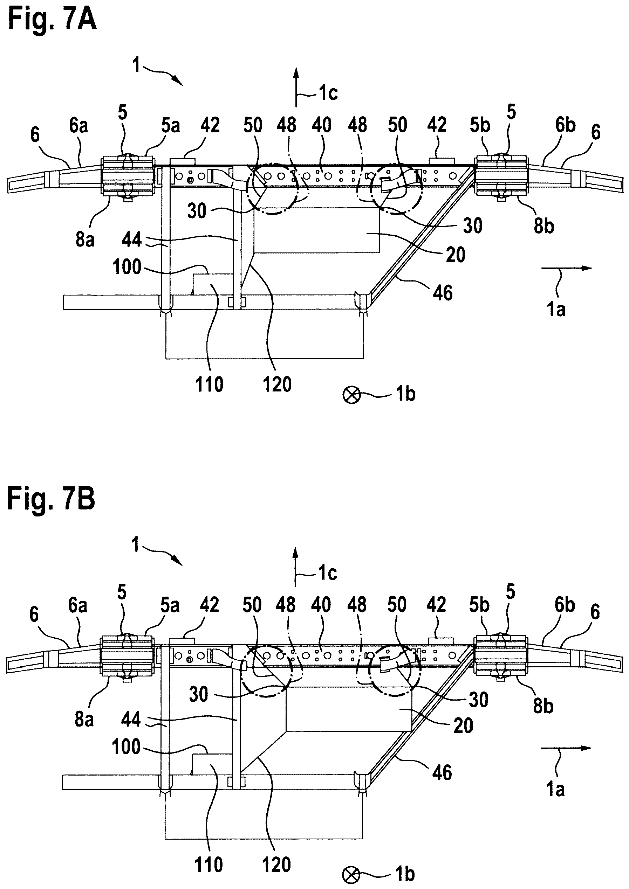

Actuator 100 may move movable support 30 with energy storage modules 20 towards actuator 100 and thus towards rotor assembly 8a to move the center of gravity of VTOL aircraft 1 in longitudinal direction 1a towards the nose of VTOL aircraft 1 as illustrated in Figure 7A.

If desired, actuator 100 may move movable support 30 with energy storage modules 20 away from actuator 100 and thus towards rotor assembly 8b to move the center of gravity of VTOL aircraft 1 in longitudinal direction 1a towards the aft of VTOL aircraft 1 as illustrated in Figure 7B.

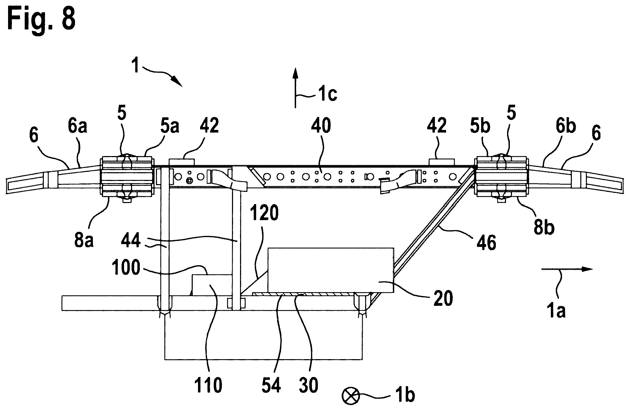

Figure 8 is a diagram of illustrative VTOL aircraft 1 having an apparatus for adjusting the center of gravity with a connecting device that includes a low friction device 54.

The connecting device may be attached to any fixed surface of VTOL aircraft 1. For example, the connecting device that includes low friction device 54 may be attached to lower longitudinal structural frame 40 of VTOL aircraft 1.

Low friction device 54 may include any device that allows to move movable support 30 from one position to another without significant friction. For example, low friction device 54 may include a ball bearing, a roll, a parylene coating, a polytetrafluoroethylene coating, or a combination thereof, just to name a few. If desired, low friction device 54 may be located in a housing and include ball bearings between the housing and rods such that movable support 30 may move along the rods without significant friction as shown in Figure 4, for example.

Movable support 30 may be attached to low friction device 54 and receive energy storage modules 20. An actuator may move movable support 30 between different positions in longitudinal direction 1a to adjust the center of gravity of VTOL aircraft 1 based on a current operating mode of VTOL aircraft 1.

According to some aspects, actuator 100 may be attached to longitudinal 40, transversal 42, and/or vertical 44 structural frames as shown in Figure 8. If desired, actuator 100 may include an actuator as described in Figure 5.

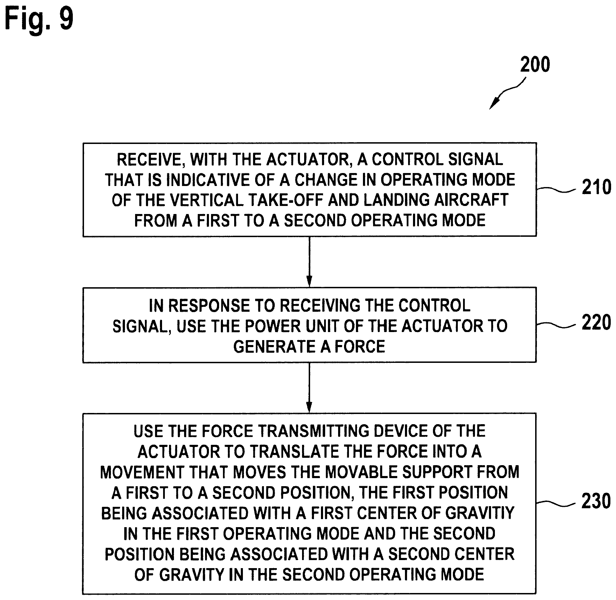

Figure 9 is a diagram of a flow chart 200 showing illustrative operations for adjusting the center of gravity of a VTOL aircraft in accordance with some embodiments.

An apparatus for adjusting the center of gravity of a vertical take-off and landing aircraft based on a current operating mode of the vertical take-off and landing aircraft may execute operations 210, 220, and 230 described in Figure 9. In some embodiments, such an apparatus may include a movable support that is movable between a plurality of positions, an energy storage module that is attached to the movable support, and an actuator that is connected to the movable support and receives a control signal that is indicative of the current operating mode.

The movable support is movable from a first to a second position of the plurality of positions by the actuator based on the control signal indicating a change of the current operating mode from a first to a second operating mode, the first position being associated with a first center of gravity in the first operating mode and the second position being associated with a second center of gravity in the second operating mode.

During operation 210, the apparatus for adjusting the center of gravity may receive, with the actuator, a control signal that is indicative of a change in operating mode of the vertical take-off and landing aircraft from a first to a second operating mode.

As an example, the apparatus for adjusting the center of gravity of Figure 8 may receive, with actuator 100, a control signal that is indicative of a change in operating mode of VTOL aircraft 1 from one operating mode (e.g., hover) to another operating mode (e.g., forward flight).

During operation 220, in response to receiving the control signal, the apparatus for adjusting the center of gravity may use the power unit of the actuator to generate a force.

As an example, in response to receiving the control signal, the apparatus for adjusting the center of gravity of Figure 8 may use the power unit 110 of the actuator 100 to generate a force.

During operation 220, the apparatus for adjusting the center of gravity may use the force transmitting device of the actuator to translate the force into a movement that moves the movable support from a first to a second position, the first position being associated with a first center of gravity in the first operating mode and the second position being associated with a second center of gravity in the second operating mode.

For example, the apparatus for adjusting the center of gravity of Figure 8 may use force transmitting device 120 of actuator 100 to translate the force into a movement that moves movable support 30 from a first to a second position, the first position being associated with a first center of gravity (e.g., ideal center of gravity 10) in the first operating mode (e.g., hover) and the second position being associated with a second center of gravity (e.g., ideal center of gravity 15) in the second operating mode (e.g., forward flight).

It should be noted that the above described embodiments are merely described to illustrate possible realizations of the present invention, but not in order to restrict the present invention thereto. Instead, multiple modifications and variations are possible and should, therefore, also be considered as being part of the invention.

By way of example, the weight that is attached to the movable support and moved to adjust the center of gravity is not limited to energy storage modules such as batteries, fuel cells, flow cells, etc. Instead, any equipment that can be moved around in the VTOL aircraft such as passenger seats, cargo, or any other considerable weight that is mountable onto the movable support, whereby the movable support is moved by one or more actuators to adjust the center of gravity to the current flight conditions and/or operating modes.

Furthermore, embodiments were described in Figures 2, 3, 6, 7a, 7b, or 8 in which the center of gravity may be adjusted in longitudinal direction 1a of VTOL aircraft 1. However, the center of gravity may be adjusted in lateral direction 1b of aircraft 1 and/or in vertical direction 1c of aircraft 1 of Figures 2, 3, 6, 7a, or 8, or in any combination of longitudinal, lateral, and/or vertical direction, if desired. For example, mounting two connecting devices 48 of Figure 4 on top of each other, attaching one of the two connecting devices to longitudinal structural frame 40 of Figure 3 or 8 and the other connecting device to movable support 30 may enable an adjustment of the center of gravity in longitudinal direction 1a and lateral direction 1b. As another example, suspending movable support 30 of Figure 6 using cables and winches may enable the adjustment of the center of gravity of VTOL aircraft 1 in vertical direction 1c. Combining the cables and winches with a first actuator that pushes and pulls movable support 30 of Figure 6 in longitudinal direction 1a and a second actuator that pushes and pulls movable support 30 in lateral direction 1b enables the adjustment of the center of gravity in longitudinal 1a, lateral 1b, and vertical 1c direction.

Moreover, the operating modes hover and cruise were presented by way of example. In fact, other operating modes (e.g., lateral flight, backward flight, etc.) may have other ideal centers of gravity and the apparatus may adjust the center of gravity of the VTOL aircraft for those other ideal centers of gravity as well.

Furthermore, illustratively, the apparatus is described as adjusting the center of gravity of an aircraft. However, the use of an apparatus for adjusting the center of gravity is not limited to aircrafts. Instead, any vehicle in which a change in the center of gravity may improve the manoeuvrability of the vehicle and that may be equipped with an apparatus for adjusting the center of gravity is likewise contemplated. By way of example, the present apparatus for adjusting the center of gravity may alternatively be applied to cars, trucks, buses, vessels, such as ships and so on.

### Reference List

- 1: aircraft
- 1a: longitudinal direction
- 1b: lateral direction
- 1c: vertical direction
- 2: aircraft airframe
- 2a: aircraft airframe internal volume
- 3: thrust producing units
- 3a, 3b, 3c, 3d: thrust producing unit
- 4: thrust producing units supporting structure
- 4a, 4b, 4c: thrust producing unit supporting structure member
- 4d: supporting structure coupling member
- 4e: connecting base element
- 5: engines
- 5a, 5b, 5c, 5d: engine
- 6: shrouding units
- 6a, 6b, 6c, 6d: shrouding
- 7: shrouding supporting structures
- 7a, 7b, 7c, 7d: shrouding supporting structure
- 8: rotor assemblies
- 8a, 8b, 8c, 8d: rotor assembly
- 10: ideal center of gravity for hover
- 15: ideal center of gravity for forward flight
- 20: energy storage module
- 30: movable support/energy storage rail
- 40: longitudinal structural frame/longeron
- 42: transversal structural frame
- 44: vertical structural frame
- 46: diagonal structural frame
- 48: connecting device
- 50: pendulum strut
- 52: rods
- 54: low friction device
- 56: housing
- 100: actuator
- 110: power unit/propulsion system/drive/motor/engine
- 120: force transmitting device
- 130: attachments
- 140: telescopic rail
- 200: flowchart
- 210, 220, 230: operations

## Claims

1. An apparatus for adjusting the center of gravity of a vertical take-off and landing aircraft (1) that comprises at least one of longitudinal (40), transversal (42), vertical (44), or diagonal (46) structural frames and that is adapted for the transportation of passengers based on a current operating mode of the vertical take-off and landing aircraft (1), comprising:
a movable support (30) that is movable between a plurality of positions;
a connecting device (48) that connects the movable support (30) to the at least one of the longitudinal (40), the transversal (42), the vertical (44), or the diagonal (46) structural frames of the vertical take-off and landing aircraft (1), wherein the connecting device (48) comprises:
pendulum struts (50) that are configured to be attached to the at least one of the longitudinal (40), the transversal (42), the vertical (44), or the diagonal (46) structural frames;
an energy storage module (20) that is attached to the movable support (30);
an actuator (100) that is attached to the at least one of the longitudinal (40), the transversal (42), or the vertical (44) structural frames, and that is connected to the movable support (30) and receives a control signal that is indicative of the current operating mode;
wherein the movable support (30) is movable from a first to a second position of the plurality of positions by the actuator (100) based on the control signal indicating a change of the current operating mode from a first to a second operating mode, the first position being associated with a first center of gravity (10, 15) in the first operating mode and the second position being associated with a second center of gravity (10, 15) in the second operating mode,
**characterized in that**
the movable support (30) is suspended from the at least one of the longitudinal (40), the transversal (42), the vertical (44), or the diagonal (46) structural frames by means of the pendulum struts (50), wherein adjusting the length of the pendulum struts (50) enables adjusting the position of the movable support (30) in a vertical direction; and
the actuator (100) comprises:
a power unit (110); and
a force transmitting device (120) that is connected between the power unit (110) and the movable support (30), wherein the force transmitting device (120) transmits a force from the power unit (110) to the movable support (30) that moves the movable support forwards or backwards in at least one dimension.

2. The apparatus of claim 1, wherein the vertical take-off and landing aircraft (1) defines a longitudinal direction (1a), a lateral direction (1b), and a vertical direction (1c), and wherein the first position differs from the second position in at least one of the longitudinal direction (1a), the lateral direction (1b), or the vertical direction (1c).

3. The apparatus of claims 1 or 2, wherein the energy storage module (20) comprises at least one of an accumulator, a battery, a fuel cell, a fuel tank, a gas tank, or a flow cell.

4. The apparatus of claim 1, wherein the force transmitting device (120) comprises at least one of a gear, a spindle, a pulley, a chain, a cord, a cable, a telescopic slide, a bar, a rod, mounted wheels on axle, or a rack and pinion.

5. The apparatus of claim 1, wherein the power unit (110) comprises at least one of an electrical motor, an internal-combustion type engine, a hydraulic motor, or a pneumatic motor.

6. A method (200) for adjusting the center of gravity of a vertical take-off and landing aircraft (1) that is adapted for the transportation of passengers using the apparatus of any one of the preceding claims, comprising:
receiving, with the actuator (100), a control signal that is indicative of a change in operating mode of the vertical take-off and landing aircraft (1) from a first to a second operating mode;
in response to receiving the control signal, using the power unit (110) of the actuator (100) to generate a force; and
using the force transmitting device (120) of the actuator to translate the force into a movement that moves the movable support (30) from a first to a second position, the first position being associated with a first center of gravity (10, 15) in the first operating mode and the second position being associated with a second center of gravity (10, 15) in the second operating mode.

7. A vertical take-off and landing aircraft (1) that is adapted for the transportation of passengers with the apparatus for adjusting the center of gravity according to any one of claims 1 to 5.

## Patentansprüche

1. Vorrichtung zum Einstellen des Schwerpunkts eines senkrecht startenden und landenden Flugzeugs (1), das mindestens einen von längs (40), quer (42), senkrecht (44) oder diagonal (46) verlaufenden Tragrahmen umfasst und das für den Transport von Passagieren auf der Grundlage eines aktuellen Betriebsmodus des senkrecht startenden und landenden Flugzeugs (1) eingerichtet ist, mit
einem beweglichen Träger (30), der zwischen einer Mehrzahl von Positionen beweglich ist
einer Verbindungsvorrichtung (48), die den beweglichen Träger (30) mit dem mindestens einen der längs (40), quer (42), vertikal (44) oder diagonal (46) verlaufenden Tragrahmen des senkrecht startenden und landenden Flugzeugs (1) verbindet, wobei die Verbindungsvorrichtung (48) umfasst:
Pendelstreben (50), die konfiguriert sind, um an dem mindestens einen längs (40), quer (42), vertikal (44) oder diagonal (46) verlaufenden Tragrahmen befestigt zu werden;
einem Energiespeichermodul (20), das an dem beweglichen Träger (30) befestigt ist;
einem Aktuator (100), der an dem mindestens einen längs (40), quer (42) oder vertikal (44) verlaufenden Strukturrahmen angebracht ist, und der mit dem beweglichen Träger (30) verbunden ist und ein Steuersignal empfängt, das den aktuellen Betriebsmodus angibt;
wobei der bewegliche Träger (30) durch den Aktuator (100) auf der Grundlage des Steuersignals, das einen Wechsel des aktuellen Betriebsmodus von einem ersten zu einem zweiten Betriebsmodus anzeigt, von einer ersten zu einer zweiten Position der Mehrzahl von Positionen bewegbar ist, wobei die erste Position einem ersten Schwerpunkt (10, 15) in dem ersten Betriebsmodus zugeordnet ist und die zweite Position einem zweiten Schwerpunkt (10, 15) in dem zweiten Betriebsmodus zugeordnet ist,
**dadurch gekennzeichnet, dass**
der bewegliche Träger (30) mittels der Pendelstreben (50) an dem mindestens einen längs (40), quer (42), vertikal (44) oder diagonal (46) verlaufenden Tragrahmen aufgehängt ist, wobei ein Einstellen der Länge der Pendelstreben (50) ein Einstellen der Position des beweglichen Trägers (30) in einer vertikalen Richtung ermöglicht; und
der Aktuator (100) umfasst:
eine Antriebseinheit (110); und
eine Kraftübertragungsvorrichtung (120), die zwischen der Antriebseinheit (110) und dem beweglichen Träger (30) angeschlossen ist, wobei die Kraftübertragungsvorrichtung (120) eine Kraft von der Antriebseinheit (110) auf den beweglichen Träger (30) überträgt, die den beweglichen Träger in mindestens einer Dimension vorwärts oder rückwärts bewegt.

2. Vorrichtung nach Anspruch 1, bei der das senkrecht startende und landende Flugzeug (1) eine Längsrichtung (1a), eine Querrichtung (1b) und eine Vertikalrichtung (1c) definiert, und wobei die erste Position sich von der zweiten Position in mindestens einer von Längsrichtung (1a), Querrichtung (1b) oder Vertikalrichtung (1c) unterscheidet.

3. Vorrichtung nach Anspruch 1 oder 2, bei der das Energiespeichermodul (20) mindestens eines von einem Akkumulator, einer Batterie, einer Brennstoffzelle, einem Brennstofftank, einem Gastank oder einer Brennstoffzelle umfasst.

4. Vorrichtung nach Anspruch 1, bei der die Kraftübertragungseinrichtung (120) mindestens eines von einem Getriebe, einer Spindel, einer Riemenscheibe, einer Kette, einer Schnur, einem Seil, einer Teleskopschiene, einer Stange, einem Stab, montierten Rädern auf einer Achse oder einer Zahnstange umfasst.

5. Vorrichtung nach Anspruch 1, bei der die Antriebseinheit (110) mindestens eines von einem Elektromotor, einem Verbrennungsmotor, einem Hydraulikmotor oder einem Pneumatikmotor umfasst.

6. Verfahren (200) zum Einstellen des Schwerpunkts eines senkrecht startenden und landenden Flugzeugs (1), das zum Transport von Passagieren eingerichtet ist, unter Verwendung der Vorrichtung nach einem der vorhergehenden Ansprüche, mit den Schritten:
Empfangen eines Steuersignals mittels des Aktuators (100), das eine Änderung des Betriebsmodus des senkrecht startenden und landenden Flugzeugs (1) von einem ersten zu einem zweiten Betriebsmodus anzeigt;
als Reaktion auf den Empfang des Steuersignals, Verwenden der Antriebseinheit (110) des Aktuators (100), um eine Kraft zu erzeugen; und
Verwenden der Kraftübertragungsvorrichtung (120) des Aktuators, um die Kraft in eine Bewegung zu übersetzen, die den beweglichen Träger (30) von einer ersten zu einer zweiten Position bewegt, wobei die erste Position mit einem ersten Schwerpunkt (10, 15) in dem ersten Betriebsmodus verbunden ist und die zweite Position mit einem zweiten Schwerpunkt (10, 15) in dem zweiten Betriebsmodus verbunden ist.

7. Zum Transport von Passagieren eingerichtetes senkrecht startendes und landendes Flugzeug (1) mit der Vorrichtung zur Einstellung des Schwerpunkts nach einem der Ansprüche 1 bis 5.

## Revendications

1. Dispositif permettant le réglage du centre de gravité d'un aéronef à décollage et atterrissage verticaux (1) qui comprend au moins un élément parmi des cadres structurels longitudinaux (40), transversaux (42), verticaux (44), ou diagonaux (46) et qui est apte au transport de passagers basé sur un mode de fonctionnement courant de l'aéronef à décollage et atterrissage verticaux (1), comprenant :
un support déplaçable (30) qui est déplaçable entre une pluralité de positions ;
un agencement de raccordement (48) qui raccorde le support déplaçable (30) audit au moins un élément parmi les cadres structurels longitudinaux (40), transversaux (42), verticaux (44), ou diagonaux (46) de l'aéronef à décollage et atterrissage verticaux (1), dans lequel l'agencement de raccordement (48) comprend :
des entretoises pendulaires (50) qui sont configurées pour être fixées audit au moins un élément parmi les cadres structurels longitudinaux (40), transversaux (42), verticaux (44), ou diagonaux (46) ;
un module d'accumulation d'énergie (20) qui est fixé au support déplaçable (30) ;
un actionneur (100) qui est fixé audit au moins un élément parmi les cadres structurels longitudinaux (40), transversaux (42), ou verticaux (44), et qui est raccordé au support déplaçable (30) et reçoit un signal de commande qui indique le mode de fonctionnement courant ;
dans lequel le support déplaçable (30) est déplaçable par l'actionneur (100), depuis une première position vers une seconde position de la pluralité de positions, sur la base du signal de commande indiquant un changement du mode de fonctionnement courant d'un premier à un second mode de fonctionnement, la première position étant associée à un premier centre de gravité (10, 15) dans le premier mode de fonctionnement et la seconde position étant associée à un second centre de gravité (10, 15) dans le second mode de fonctionnement; **caractérisé en ce que** le support déplaçable (30) est suspendu audit au moins un élément parmi les cadres structurels longitudinaux (40), transversaux (42), verticaux (44), ou diagonaux (46) au moyen d'entretoises pendulaires (50), dans lequel le réglage en longueur des entretoises pendulaires (50) permet de régler la position du support déplaçable (30) suivant une direction verticale ; et
l'actionneur (100) comprend :
une unité de puissance (110) ; ainsi
qu'un dispositif de transmission d'effort (120) qui est connecté entre l'unité de puissance (110) et le support déplaçable (30), dans lequel un dispositif de transmission d'effort (120) transmet un effort depuis l'unité de puissance (110) vers le support déplaçable (30) qui déplace le support déplaçable vers l'avant ou vers l'arrière suivant au moins une dimension.

2. Dispositif selon la revendication 1, dans lequel l'aéronef à décollage et atterrissage verticaux (1) définit une direction longitudinale (1a), une direction latérale (1b), et une direction verticale (1c), et dans lequel la première position diffère de la seconde position suivant au moins une direction parmi la direction longitudinale (1a), la direction latérale (1b), ou la direction verticale (1c).

3. Dispositif selon la revendication 1 ou 2, dans lequel le module d'accumulation d'énergie (20) comprend au moins un élément parmi : un accumulateur, une batterie, une cellule de carburant, un réservoir de carburant, un réservoir de gaz ou une batterie à flux.

4. Dispositif selon la revendication 1, dans lequel le dispositif de transmission d'effort (120) comprend au moins un élément parmi un engrenage, un arbre, une poulie, une chaîne, un cordon, un câble, une glissière télescopique, une barre, une bielle, des roues montées sur essieu, ou une crémaillère et un pignon.

5. Dispositif selon la revendication 1, dans lequel l'unité de puissance (110) comprend au moins un élément parmi un moteur électrique, un moteur à combustion interne, un moteur hydraulique ou un moteur pneumatique.

6. Procédé (200) permettant le réglage du centre de gravité d'un aéronef à décollage et atterrissage verticaux (1) qui est apte au transport des passagers et utilisant le dispositif selon l'une quelconque des revendications précédentes, prévoyant de :
Recevoir, avec l'actionneur (100), un signal de commande qui indique un changement de mode de fonctionnement de l'aéronef à décollage et atterrissage verticaux (1) depuis un premier vers un second mode de fonctionnement ;
en réponse à la réception du signal de commande, utiliser l'unité de puissance (110) de l'actionneur (100) pour générer un effort ; et
utiliser le dispositif de transmission d'effort (120) de l'actionneur pour transformer l'effort en un mouvement qui déplace le support déplaçable (30) depuis une première vers une seconde position, la première position étant associée à un premier centre de gravité (10, 15) dans le premier mode de fonctionnement et la seconde position étant associée à un second centre de gravité (10, 15) dans le second mode de fonctionnement.

7. Aéronef à décollage et atterrissage verticaux (1) qui est apte au transport de passagers pourvu du dispositif permettant le réglage du centre de gravité selon l'une quelconque des revendications 1 à 5.
